# EUROPEAN PATENT SPECIFICATION

(11) **EP 2 024 412 B1**
(45) Date of publication and mention of the grant of the patent: **07.07.2010**
(21) Application number: 07729035.1
(22) Date of filing: 11.05.2007
(51) Int. Cl.: C08G 18/65, C08G 18/36, C08G 18/08, C08G 18/69

(54) **AQUEOUS DISPERSION OF AN AUTO-OXIDATIVELY DRYING POLYURETHANE**
WÄSSRIGE DISPERSION EINES AUTOOXIDATIV TROCKNENDEN POLYURETHANS
DISPERSION AQUEUSE D'UN POLYURÉTHANE SÉCHANT PAR AUTOXYDATION

(30) Priority: 12.05.2006 EP 06113887
(43) Date of publication of application: 18.02.2009
(73) Proprietor: Nuplex Resins B.V., 4612 RB Bergen op Zoom (NL)
(72) Inventor: MESTACH, Dirk Emiel Paula, 2560 Nijlen (BE); BAKX, Fredericus Cornelis Adrianus, 4624 JG Bergen op Zoom (NL)
(74) Representative: Derks, Wilbert
(86) International application number: PCT/EP2007/054583
(87) International publication number: WO 2007/131959

(56) References cited:
- EP-A1- 0 640 632
- WO-A-2006/047746
- US-A- 4 644 030
- US-A1- 2004 260 008

## Description

The present invention relates to a process for the preparation of an aqueous dispersion of an auto-oxidatively drying polyurethane, to an aqueous dispersion of an auto-oxidatively drying polyurethane obtainable by the process of the invention and to the use thereof for the manufacture of coating compositions, printing ink compositions and adhesive compositions. The present invention further also relates to coating compositions, printing ink compositions or adhesive compositions, comprising the aqueous dispersion of an auto-oxidatively drying polyurethane according to the invention, and to the use of said coating composition as a coating for fabrics, plastics, wood or metal.

Aqueous polyurethane dispersions are widely used as binder materials in such diverse products as surface coatings, printing inks, adhesives etc. Auto-oxidatively drying polyurethane dispersions crosslink at room temperature upon drying in contact with oxygen in air, without the necessity of using a crosslinking agent. Due to strict environmental requirements there is a desire to reduce the amount of volatile organic hydrocarbon solvent. Waterborne dispersions therefore have become increasingly important. On the other hand the desired properties in the envisaged use of the aqueous polyurethane dispersions are also increasing. For example for coating compositions it is required that the resulting coating layer has good mechanical properties like a high hardness combined with good flexibility, good optical properties like a high gloss, and high durability properties like a high chemical resistance, and high water resistance etc.

US 4.277.380 describes a process for the manufacture of water dispersible auto-oxidisable polyurethane polymers comprising reacting an unsaturated fatty acid ester polyol with a isocyanate terminated prepolymer of a polyhydroxy carboxylic acid, for example a 2,2-dimethylol alkanoic acid, and a diisocyanate. The reaction product can be dispersed in water through neutralization of its free carboxylic groups with an ammonium salt forming base. The reaction takes place in a solvent which, in order to improve dispersability, can be replaced before the dispersion step by a coupling solvent.

Similarly, in EP 0 379 007 an alkyd resin is prepared by reacting unsaturated oxidatively drying fatty acids with dicarboxylic acid (anhydrides), polyol components and optional diol components. This alkyd is then reacted with a 2,2-bis-(hydroxymethyl)-alkane-monocarboxylic acid and diisocyanate in an organic solvent, typically N-methylpyrrolidone. After converting the carboxylic acid groups of the 2,2-bis-(hydroxymethyl)-alkane-monocarboxylic acid to their salt form, the polyurethane is dispersed in water.

The problem of the processes according to the prior art is that the unsaturated groups in the polyurethane polymer have an undesirably low hydrolytic stability. This will result in a deterioration of the drying properties upon aging. Further, the prior art processes typically involve the use of so called coupling agents or of high boiling solvents like N- methylpyrrolidone that are difficult to remove from the aqueous dispersion or the coating composition made thereof. The presence of said residues in a coating is undesired because they have been found to deteriorate mechanical properties and reduce the appearance and stability of the coating.

The object of the invention is to provide an aqueous dispersion of an auto-oxidatively drying polyurethane that does not have said disadvantages.

This object is achieved in a process for the preparation of an aqueous dispersion of an auto-oxidatively drying polyurethane, comprising the steps of
(a) forming the auto-oxidatively drying polyurethane by reacting:
   (i) an unsaturated fatty acid esterified polyol,
   (ii) a hydroxyl functional polyalkene having one or more unsaturated bonds in the backbone chain between 2 hydroxyl groups,
   (iii) a polyhydroxy carboxylic acid,
   (iv) a polyisocyanate, and
   (v) optionally a diol having no polyunsaturation;
(b) optionally adding a neutralizing agent; and
(c) dispersing the product of step (a) or (b) in water to form an aqueous dispersion.

It has been found that the dispersions of the invention have excellent drying properties. Despite the hydrophobic nature of the hydroxyl functional polyalkene the polyurethane dispersions according to the invention still have a good dispersability in water. It has further been found that in the process according to the invention no additional solvents are needed to dissolve the reactants or alternatively that low boiling solvents can be used that can easily and completely be removed from the dispersion.

Accordingly, the aqueous dispersions of an auto-oxidatively drying polyurethane obtainable by the process of the invention have a low content of organic solvent, or are even substantially solvent free. A further environmental advantage is that the amounts of volatile organic compounds present in the dispersions are substantially reduced.

US 5.672.653 describes a process for the manufacture of aqueous dispersions of a polyurethane-urea wherein in a first step an aqueous an NCO functional polyurethane prepolymer dispersion is prepared by reacting hydroxyl-terminated polybutadiene with an aliphatic isocyanate and a diol containing acid groups (like 2,2-di(hydroxymethyl)alkanoic acid). The polyurethane prepolymer is subsequently formed into a dispersion and converted to a polyurethane-urea polymer by chain extension with a diamine chain extension agent.

Similarly, WO 99/48941 describes the preparation of an NCO functional polyurethane prepolymer by reacting a polyisocyanate, a hydroxyl-terminated polybutadiene and a diol containing neutralized acid groups, and preparing a dispersion of the prepolymer in water. The polyurethane prepolymer is then converted to a polyurethane-urea polymer by chain extension with a diamine or hydrazine chain extension agent.

Also EP 1 172 389 A1 describes a process for the manufacture of an aqueous polyurethane-urea dispersion wherein an NCO functional prepolymer is prepared of polybutadiene containing at least two isocyanate reactive groups, a diol containing partly neutralized acid groups, and a polyisocyanate. The polyurethane prepolymer is then converted to a polyurethane-urea polymer by chain extension with a diamine chain extension agent.

A general disadvantage of the above described process is not only that the process is more complicated, but also that the obtained a polyurethane-urea dispersions based on isocyanate reactive polyalkene, in particular polybutadiene diol, is that the coatings have relatively poor adhesion properties.

WO 2006/047746 discloses in Example 9 an aqueous polyurethane dispersion which is prepared from a prepolymer obtained by reacting an unsaturated oil functional diol, a polyol, trimethylolpropane monoethoxylate methylether, triallylcyanurate, and isophorone diisocyanate. The prepolymer is reacted with dimethylol propionic acid, followed by neutralizing the obtained prepolymer with triethylamine, dispersing it in water and extending the dispersed prepolymer with hydrazine. The polyurethane dispersion does not contain a hydroxyl functional polyalkene component (ii).

US-A-4.644.030 discloses a method for making an aqueous dispersion of vinyl addition polymer material comprising polyurethane-urea. The method comprises producing an NCO terminated polyurethane prepolymer in the presence of inert liquid polymerizable ethylenically unsaturated monomer material, dispersing the product in water, chain-extending the prepolymer in the resulting aqueous dispersion and subjecting the product to vinyl addition polymerization conditions to polymerize said monomer material in situ. The product is not an auto-oxidatively drying polyurethane. The polyurethane dispersion does not contain an unsaturated fatty acid esterified polyol component (i). In Example XII linoleic acid and dimethylolpropionic acid are added together, however at the prevailing reaction conditions these compounds do not react to form unsaturated fatty ester esterified polyols.

In EP 0 640 632 a water dispersible, one component, self crosslinkable poly(urethane-urea) composition is prepared by fouling a prepolymer comprising an alcoholised drying oil, a diisocyanate, optionally a polyalkylene ether polyol, and a dihydroxy containing alkanoic acid polyol. This publication does not teach the use of a hydroxyl functional polyalkene having unsaturated bonds in the backbone chain. Also in this publication the polyurethane prepolymer is subsequently neutralized and then converted to a polyurethane-urea polymer by chain extension with a diamine chain extension agent.

The above described polyurethane dispersions do not contain a hydroxyl functional polyalkene component (ii) having one or more unsaturated bonds in the backbone chain between 2 hydroxyl groups. The general disadvantage of the polyurethane dispersions or coating compositions made thereof is that the drying properties are not very good.

US 2004/0260008 A1 discloses a method for making an aqueous emulsion of polyolefin employing a functionalized emulsification facilitating compound, and a process for making a hybrid dispersion of a polyolefin and a polyurethane. The obtained compound does not contain an unsaturated fatty acid esterified polyol component (i) and has both poorer drying properties, poorer adhesion properties and poorer coating mechanical properties like flexibility.

The aqueous dispersions of an auto-oxidatively drying polyurethane according to the invention differ from the aforementioned prior art documents mainly in that they have unsaturated groups in the main chain, originating from the hydroxyl functional polyalkene (component ii) and unsaturated groups pending from the main chain, originating from the unsaturated fatty acid esterified polyol (component i). Apart from that, in the process according to the invention the polyurethane polymer can be formed directly in one step without necessity of conversion to a polyurethane urea compound by diamine chain extension. Coatings produced from a coating composition comprising the dispersion according to the invention show an excellent hardness of the dried film layer, good drying properties, improved penetration of porous substrates like wood, and better adhesion on non-porous substrates like metal. Further, the flowing properties and open time of paints or coating compositions prepared with the present polyurethane dispersions are improved.
The components used in the process for the preparation of the auto-oxidatively drying polyurethane and the process steps of the process according to the present invention will now be described in more detail.

Component (i) is an unsaturated fatty acid esterified polyol. In the context of the present invention, the term 'unsaturated fatty acid esterified polyol' is used to denote the reaction product of an unsaturated carboxylic acid and a polyol.

The unsaturated fatty acid esterified polyol can be the product of an esterification (polycondensation) reaction of a suitable polyol with unsaturated fatty acids. It is preferred that the polyol, used for the esterification reaction, does not contain any carboxylic groups. The esterification reaction can be catalyzed with an ester-interchange catalyst. Alternatively, the unsaturated fatty acid esterified polyol can be derived from a (semi-)drying oil by for example alcoholysis.

Preferred unsaturated fatty acids that may be esterified with a polyol include linoleic acid, palmitoleic acid, linolenic acid, eleosteric acid, licanic acid, arachidonic acid, ricinoleic acid, and mixtures thereof as can be found in soya bean oil fatty acid, wood oil fatty acid, safflower oil fatty acid, castor oil fatty acid, ricinene fatty acid, ground nut oil fatty acid, tall oil fatty acids and conjugated fatty acids.

The unsaturated fatty acid esterified polyol can also be prepared by alcoholysis of a semi-drying oil or drying oil, preferably an alcoholised glycerol oil, preferably followed by enriching the dihydroxy functional molecules. Examples of drying oils that can be used in this process are dehydrated castor oil, soya bean oil, sunflower oil, linseed oil, safflower oil, and mixtures thereof.

Particularly preferred alcohols and polyols that may be used for the alcoholising reaction or in the esterification reaction may be selected from the group consisting of glycerol, adipate polyester polyol, caprolactone based polyol, polyether triol, polyester based triol, trimethylol propane, polyether diol, pentaerythritol, and mixtures thereof, with trimethylol propane, glycerol, and pentaerythritol more preferred, and pentaerythritol and trimethylol propane most preferred.

Also conjugated fatty acids and saturated or unsaturated mono-, di-, tri- or tetra-functional carboxylic acids can be used as additional acids in the esterification (polycondensation) reaction.
Examples of mono-functional carboxylic acids that can be used in this reaction are benzoic acid, tert.-butyl benzoic acid, hexahydro benzoic acid and 2-ethyl-hexanoic acid or the anhydrides thereof. As di-functional carboxylic acids organic dicarboxylic acids or the anhydrides thereof can be used. The following are suitable dicarboxylic acids: phthalic acid, isophthalic acid, terephthalic acid, tetrahydrophthalic acid, hexahydrophthalic acid, maleic acid, fumaric acid, adipic acid, succinic acid, dimeric fatty acid and sebacic acid. As mentioned earlier, also the anhydrides and dianhydrides of these acids can be used.

Examples of suitable tri-funetional carboxylic acids are trimellitic acid, 1,3,5-benzenetricarboxylic acid, citric acid, and the mono-, di- or trianhydrides or mixtures thereof. Preferred tri-functional carboxylic acids are 1,3,5-benzenetricarboxylic acid and trimellitic acid of the anhydride thereof, with trimellitic acid or the anhydride thereof being most preferred.

Tetra-functional carboxylic acids or the anhydrides thereof which may be used include 1,2,4,5-benzene tetracarboxylic acid, tetrahydrofuran-2,3,4,5-tetracarboxylic acid, 3,3',4,4'-benzophenone tetracarboxylic acid, cis,cis,cis,cis-1,2,3,4-cyclopentane tetracarboxylic acid, 1,4,5,8-naphthalene tetracarboxylic acid, or other similar tetracarboxylic acids or the mono-, di-, tri- or tetra-anhydrides thereof.

In a preferred embodiment of the process according to the invention the unsaturated fatty acid esterified polyol (i) is an unsaturated fatty acid esterified polyester polyol said polyester polyol being the polycondensation product of at least one unsaturated polyfunctional alcohol and at least one di-functional acid or anhydride thereof.

For the preparation of a polyurethane with a sufficient molecular weight it is preferred that the unsaturated fatty acid esterified polyol has an average hydroxyl functionality of at least 2, and for example has an average hydroxyl functionality between 2 and 3. This means that the unsaturated fatty acid esterified polyol comprises at least two hydroxyl groups, for example 2 or 3. In case the unsaturated fatty acid esterified polyol would have an average hydroxyl functionality of 1, it will only have one hydroxyl group to react with the isocyanate groups, and the preparation of a long chain polyurethane will therefore be impaired. The preparation of the unsaturated fatty acid esterified polyol comprising at least two hydroxyl groups may be accomplished by techniques known to those skilled in the art.

The unsaturated fatty acid esterified polyol preferably has a number average molecular weight of at least 1,000 g/mol, more preferably at least 1,200 g/mol and even more preferably at least 1,400 g/mol. This ensures that the polyurethane, prepared with the unsaturated fatty acid esterified polyol and the other components, has a sufficiently high molecular weight, and can be used without further treatment or extension steps.

The unsaturated fatty acid esterified polyol can be used in the reaction in an amount of 1 to 90 wt. %, more preferably 5 to 80 wt. % and most preferably between 10 and 80 wt%. In principle the ratio between the pending unsaturation component (i) and the in-chain component (ii) can vary between wide ranges. However in view of a good drying behaviour and coating properties, the components (i) en (ii) are present in a weight ratio (i)/(ii) = 0.30 - 3, more preferably between 0.5 and 2.

In a preferred embodiment, the auto-oxidatively drying polyurethane is substantially a polyalkylene diol modified alkyd comprising the unsaturated fatty acid esterified polyol as a major part of the OH-functional binder system. The polyalkylene diol component (ii) herein is preferably present in a relatively minor amount, preferably between 1 and 30 wt%, more preferably between 1 and 20 wt%. It was found that this binder system shows very good properties even with a relatively low amount of the more expensive polyalkylene diol compound.

Preferably, unsaturated fatty acid esterified polyol is present in an amount of at least 50 wt%, more preferably at least 60 wt%, even more preferably at least 70 wt% and most preferably at least 80 wt% relative to the total of hydroxy functional components (i, ii, iii and optional v) in the binder system and at least 30wt. %, more preferably at least 40 wt. %, even more preferably at least 50 wt. % and most preferably at least 60 wt. % relative to the total weight of the polyurethane.

Component (ii) used in the process for the preparation of the polyurethane is a hydroxyl functional polyalkene having one or more unsaturated bonds in the backbone chain between 2 hydroxyl groups. The hydroxyl functional polyalkene is apart from the hydroxyl functionality essentially hydrocarbon of nature. Suitable hydroxyl functional polyalkenes having unsaturated bonds in the backbone chain are hydroxyl functional polyalkadienes, hydroxyl functional polyalkatrienes etc. Preferably the monomer component of the polyalkene having unsaturated bonds in the backbone chain contains from 3 to about 8 carbon atoms. Of particular use are hydroxyl functional polyalkadienes, such a hydroxyl-terminated polyalkadienes. Some specific examples thereof include hydroxyl-terminated polybutadiene, hydroxyl-terminated polypentadiene, hydroxyl-terminated polyhexadiene, hydroxyl-terminated polyheptadiene and hydroxyl-terminated polyoctadiene, hydroxyl-terminated polyisoprene and hydroxyl-terminated polychloroprene Preferably, the hydroxyl functional polyalkene (ii) comprises polyalkadiene diol, preferably polybutadienediol. More preferably the hydroxyl functional polyalkene (ii) essentially consists of polybutadienediol.

Although the number average molecular weight of the polybutadiene is not critical, the polybutadienes that are easily obtained in the market have a number average molecular weight from 500 to 5,000 g/mol. Preferably the polyalkene comprises 2 hydroxyl groups. Hydroxyl-terminated polybutadienes are commercially available from Elf Atochem under the trade name PolyBd^{®}. Suitable types include PolyBd^{®} R45HTLO, PolyBd^{®} R-45M and PolyBd^{®} R-20LM.

The hydroxyl functional polyalkene is preferably used in an amount of 1 to 90 wt. %, more preferably 1 to 70 wt. %, more preferably 1 to 50 wt. %, even more preferably 1 to 30 % and most preferably 1 to 20 % by weight, based on the weight of the polyurethane.

Component (iii) used in the process for the preparation of the polyurethane is a polyhydroxy carboxylic acid. The polyhydroxy carboxylic acid can be reacted with the diisocyanate (component iv) without significant reaction between the carboxylic groups of the polyhydroxy carboxylic acid and the diisocyanate component. The suitable polyhydroxy carboxylic acids may have one or two substituents on the alpha carbon atoms. The substituents may, for example, be a hydroxyl or alkyl group (such as an alkylol group).

The polyhydroxy carboxylic acid has at least one carboxylic group, and generally has 1 to 3 carboxylic groups, per molecule. The preferred polyhydroxy carboxylic acids are polyhydroxy alkanoic acids having 2 to 20 or more carbon atoms (more preferably from 2 to 10 carbon atoms, such as tartaric acid). Examples thereof are 2,2,2-trialkylol alkanoic acids (for example 2,2,2-trimethylol acetic acid), 2,2-dialkylol alkanoic acids and the like. The 2,2-dialkylol alkanoic acids contain for example an alkylol group of 1 to 3 carbon atoms.
A particularly preferred group of 2,2-dialkylol alkanoic acids comprises the 2,2-dimethylol alkanoic acids including, for example, 2,2-dimethylol acetic acid, 2,2-dimethylol propionic acid, 2,2-dimethylol butyric acid, 2,2-dimethylol pentanoic acid and mixtures thereof. Most preferably employed is 2,2-dimethylol propionic acid (DMPA^{®} ex Geo Chemicals).

The polyhydroxy carboxylic acid is used in an amount of 1 to 10 wt. %, more preferred 1 to 7 wt. %, even more preferred 1 to 5 wt. % and most preferred 1 to 4 wt. %, based on the weight of the polyurethane.

Component (iv) in the process for the preparation of the polyurethane is a polyisocyanate, and more in particular an aromatic, aliphatic or a cycloaliphatic polyisocyanate. The polyisocyanate can be a diisocyanate or a triisocyanate, and is preferably a diisocyanate. Aromatic diisocyanates may be less preferred for some applications where outdoor durability and resistance to yellowing are required. Suitable diisocyanates have at least 6 carbon atoms and usually do not have more than 40 carbon atoms. Diisocyanates of 6 to 20 carbon atoms in the hydrocarbon group are preferred, such as those selected from the group consisting of 2,4-toluene diisocyanate; 2,6-toluene diisocyanate; 1,4-cyclohexane diisocyanate; dicyclohexylmethane-4,4'-diisocyanate (H₁₂MDI); diphenylmethane-4,4'-diisocyanate; diphenylmethane-3,4'-diisocyanate; xylylene diisocyanate, 1-isocyanato-3-isocyanatomethyl-3,5,5-trimethylcyclohexane (isophorone diisocyanate, IPDI); hexamethylene diisocyanate; methylcyclohexyl diisocyanate; tetramethylxylene diisocyanate (TMXDI); 2,4,4-trimethylhexylmethylene diisocyanate, and mixtures thereof. Other diisocyanates, such as those described e.g. in "Methoden der organischen Chemie" (Houben-Weyl), Volume 14/2, 4th Edition, Georg Thieme Verlag, Stuttgart 1963, pages 61-70, can be used as well. Most preferably the diisocyanate is selected from the group consisting of H₁₂MDI, IPDI, TMXDI or mixtures thereof.

The polyisocyanate is preferably used in an amount of 1 to 40 wt. %, more preferably 1 to 20 wt. %, and even more preferred 1 to 10 % by weight, based on the weight of the polyurethane.

Component (v) that can be optionally used in the process for the preparation of the polyurethane is a diol having no polyunsaturation. In this context diol implies having an average of at least 2, preferably between 2 and 3, most preferably 2 hydroxyl groups. This diol compound can be used to balance the stoichiometry of the formulation, introduce branching, and improve the flexibility of the polyurethane.

This diol component having no polyunsaturation can be at least one dihydric alcohol in the molecular weight range of from 62 to 5,000 g/mol. The diols used can be either low molecular weight compounds or hydroxyl-terminated polymers.

Examples of low molecular weight diols having no polyunsaturation are ethylene glycol, 1,3- and 1,2- propylene glycol, butane-1,4-diol, butane-1,3-diol, butane-2,3-diol, hexane diol, diethylene glycol, triethylene glycol, hydrogenated bisphenols, 1,4-cyclohexane diol, 1,4-cyclohexane dimethanol and neopentyl glycol.
Examples of hydroxyl-terminated polymers are polyalkylene ether polyols having no polyunsaturation. Such polyalkylene ether polyols can be incorporated in order to improve the flexibility of the polyurethane. Preferred polyalkylene ether polyols in this respect have a molecular weight of from 400 to 5,000 g/mol. More preferably the polyalkylene ether polyols having no polyunsaturation are selected from poly(oxytetramethylene)glycol (PTMG) and poly(oxypropylene)glycol (PPG). When used, the polyalkylene ether polyol is preferably poly(oxytetramethylene)glycol (PTMG). Other hydroxyl-terminated polymers having no polyunsaturation are poly(caprolactone)glycol (PCL); poly(1,6-hexanediol adipate)glycol (PHAG); poly(1,4-butyl adipate)glycol (PBAG), poly(carbonate)glycol (PCG), and mixtures thereof. A special polyether diol which can be used to provide additional non-ionic stabilization to the polyurethane is available under the trade name Tegomer^{®} D 3403 from Tego Chemie Service GmbH. Another type of hydroxyl-terminated polymers that can be used are hydrogenated polybutadiene diols. These products are commercially available under the trade name Polytail^{®} from the Mitsubishi International Corporation.

The diol having no polyunsaturation is used in an amount of 0 to 30 wt. %, preferably 0 to 20 wt. %, more preferably 0 to 10 wt. % and even more preferably 0 to 5 wt. %, based on the weight of the polyurethane.

In order to prepare a water dispersible polyurethane, i.e. in order to make the polyurethane polymer water compatible, the free carboxylic acid groups derived from the polyhydroxy carboxylic acid in the polyurethane are usually fully or partly neutralized. The neutralization is performed by adding a neutralizing agent to the product. The addition of the neutralizing agent can be performed at any stage of the reaction. The free carboxylic acid groups of the polyhydroxy carboxylic acid can be fully or partly neutralized by adding the neutralizing agent before adding the polyhydroxy carboxylic acid to the reaction mixture, or the addition of the neutralizing agent can take place at any later stage of the reaction. It is also possible to add the neutralizing agent after the preparation of the polyurethane, or even at the stage of preparing the dispersion. Alternatively, the polyurethane comprises groups that cause self-neutralization, which would make the neutralization step at least partly superfluous.

The neutralization can be effected with 0.5 to 2.5 wt. % of a neutralizing agent (relative to the total weight of the polyurethane dispersion). However, this amount of neutralizing agent is not critical, and can be more than 2.5 wt. %, for example 3, 4 or 5 wt. %, or less than 0.5 wt. %, if necessary.

The following are examples of suitable neutralizing agents: alkali metal hydroxides, ammonia, dimethylamine, diethylamine, dipropylamine, dibutylamine, trimethylamine, triethylamine, tripropylamine, tributylamine, triethanolamine, monoethanolamine, N-dimethylethanolamine, N-methylethanolamine, diethanolamine, N-methyldiethanolamine, monoisopropanolamine, diisopropanolamine, triisopropanolamine, morpholine, N-methylinorpholine, 2-amino-2-methyl-1-propanol and mixtures of such bases. Ammonia and triethylamine are particularly preferred.

In a preferred embodiment the process according to the invention comprises the steps of:
(a) providing 20 to 80 wt. % of auto-oxidatively drying polyurethane formed by reacting:
   (i) 1 to 90 wt. % of an unsaturated fatty acid esterified polyol,
   (ii) 1 to 90 wt. % of a hydroxyl functional polyalkene having one or more unsaturated bonds in the backbone chain between 2 hydroxyl groups,
   (iii) 1 to 10 wt. % of a polyhydroxy carboxylic acid,
   (iv) 1 to 40 wt. % of a polyisocyanate, and
   (v) 0 to 30 wt. % of a diol having no polyunsaturation;
   wherein the amounts of components (i) to (v) add up to 100 wt. %;
(b) optionally adding 0.5 to 2.5 wt. % of a neutralizing agent; and
(c) adding 20 to 80 wt. % of water to the product of step (b) to form an aqueous dispersion,
wherein the amounts of (a), (b) and (c) add up to 100 wt. %.

The relative amounts of the unsaturated fatty acid esterified polyol component (i) and the hydroxyl functional polyalkene component (ii) can in principle vary between wide ranges. The hydroxyl functional polyalkene can for example be present in an amount of 1 to 99 wt. % of the combined weight of the hydroxyl functional polyalkene and the unsaturated fatty acid esterified polyol, or in an amount of 2 to 80 wt. % thereof etc. However, it is more preferred that the unsaturated fatty acid esterified polyol is present in excess relative to the hydroxyl functional polyalkene. The advantage thereof is that the polyurethane in a coating composition, prepared with the polyurethane dispersion of the invention, has an optimum balance of hydrolytic resistance and mechanical, optical and adhesion properties, and at the same time is easy and relatively inexpensive to produce. The hydroxyl functional polyalkene therefore preferably constitutes 2 to 50 wt. % of the combined weight of the hydroxyl functional polyalkene and the unsaturated fatty acid esterified polyol. The hydroxyl functional polyalkene used constitutes more preferably 2 to 40 wt. %, even more preferably 2 to 30 wt. %, still more preferably 2 to 25 wt. %, and most preferably 2 to 20 wt. % of the combined weight of the hydroxyl functional polyalkene and the unsaturated fatty acid esterified polyol.

Although some chain extension, for example through urea bonds, can be allowed whilst still obtaining the advantages of the invention, in the most preferred embodiment of the process according to the invention a polyurethane polymer is prepared as described above which is dispersed, optionally after neutralization, without further chain extension, in particular without chain extension by reaction of free isocyanate groups on the polyurethane polymer with diamine or with water. In view of that, the polyisocyanate component (iv) on the one hand, and the hydroxyl group containing components (i), (ii) and optionally (v) on the other hand are chosen in such weight ratios that the ratio of isocyanate (NCO) groups to hydroxyl (OH) groups present in the reaction mixture of step (a) is below 1.4, preferably below 1.3, more preferably below 1.2, still more preferably below 1.1, and even more preferably below 1.0. During the polyurethane forming reaction, the isocyanate groups of the polyisocyanate component will react with the hydroxyl groups present in the reaction mixture. On completion of the polymerisation reaction the formed polyurethane preferably has a free NCO group content below 3 wt. % (relative to the total polyurethane weight), more preferably below 2 wt. %, and even more preferably below 1 wt. % (NCO content is measured according to ASTM D2572).

The polyurethane can be chain extended by adding a chain extension agent to the polyurethane comprising free NCO groups. Suitable chain extension agents contain isocyanate reactive hydrogen atoms that react with the free isocyanate groups. Examples thereof are diamines. The number of free NCO groups to be extended is as described above preferably less than 3 wt. %. Although in this case strictly speaking a polyurethane-urea compound is formed, in this context this compound is called a polyurethane.

Preferably the weight average molecular weight of the polyurethane is at least 30,000 g/mol. The molecular weight of the components of the polyurethane, in particular the molecular weight of the unsaturated fatty acid esterified polyol, is preferably chosen sufficiently high so that chain extension is not needed to obtain a polyurethane with the desired molecular weight. By excluding the chain extension step the process for the preparation of the auto-oxidatively drying polyurethane is more cost effective and industrially more advantageous as it comprises less process steps.

The auto-oxidatively drying polyurethane is prepared by reacting components (i) to (v). The reaction may be performed in one or more consecutive steps, but is most conveniently done by forming a reaction mixture of all components (i) to (v), and allowing the components to react in a suitable reactor, preferably by increasing the reaction temperature to 80-100 °C. Subsequent to the increase of the temperature, the polyisocyanate (iv) is added..

In order to increase the reaction rate of the isocyanate-hydroxyl reaction, a catalyst can be added. Suitable catalysts are dibutyl tin dilaurate and dibutyl stannous oxide. The catalyst can be used in an amount of 0.02 - 0.1 wt. % of the reaction mixture.

It is very important that the reaction mixture is homogeneous at the point when the polyisocyanaat component is added. In particular the polyhydroxycarboxilic acid component (iii) has a poor solubility. In prior art methods a strong solvents like NMP is always added to achieve this. It is a particular advantage of the process of the invention, in particular of the process for preparing the preferred polyalkylenediol modified alkyd embodiment described above, that this homogeneity can be achieved by without the necessity of adding NMP. It is believed that due to the nature of the specified components in the reaction mixture the polyhydroxy carboxylic acid will readily dissolve or disperse in the reaction mixture at elevated temperature even without the use of strong (high boiling) solvents like N-methylpyrrolidone (NMP). A high boiling solvent is considered to be a solvent with a boiling temperature of above 200°C. The reaction can even be performed without the use of a solvent.

A low boiling organic solvent (i.e. with a boiling temperature below 200°C, preferably below 150°C and even more preferably below 100°C) that is essentially inert to the reaction with isocyanates can be added if needed to reduce the viscosity of the reaction mixture and/or for temperature control by removing heat from the exothermic reaction by reflux-cooling of the low boiling solvent. In order to be inert to the reaction, such solvent should not contain active hydrogen as determined by the Zerewitinoff test, see Kohler, "Journal of the American Chemical Society, page 381, Volume 49 (1927). Preferred low boiling solvents are the readily available ketones such as methyl ethyl ketone and acetone. Most preferred is methyl ethyl ketone. It is possible to use a higher boiling solvent like N-methylpyrrolidone, however, this is not preferred as such high boiling solvents cannot be used for reflux cooling and cannot be readily removed from the product by distillation.

If used, the solvent can be added during or after step (a) or (b), preferably during step (a) or (b), and most preferably during step (a). The solvent can thus be added before, during or after the addition of the several components. By adding the solvent during step (a) the viscosity of the reaction mixture can be regulated, and the heat produced by the reaction will be dissipated. For example, it is possible and preferred to add the solvent before or during the addition of the polyhydroxy carboxylic acid, in order to assist the dissolving or dispersing of the polyhydroxy carboxylic acid in the reaction mixture.

The optionally used organic solvent can be removed by means of distillation, before, during or after preparing the dispersion of the polyurethane in water. As a result it is possible to prepare an aqueous dispersion of an auto-oxidatively drying polyurethane according to the present invention, containing a volatile organic compounds (VOC) content of less than 50 g/litre, preferably less than 30 g/litre and more preferably less than 20 g/litre as measured by ISO method 11890-2. As already mentioned, it is also possible to perform the reaction without the use of any solvent.

The weight average molecular weight of the polyurethane is preferably at least 10,000, more preferably at least 15,000, even more preferably at least 20,000 and most preferably at least 30,000 g/mol and typically ranges between 10,000 to 80,000, preferably from 15,000 to 70,000 and most preferably from 20,000 to 60,000g/mol. The hydroxyl value of the polyurethane is from 40 to 140 mg KOH/g, preferably from 60 to 120 mgKOH/g. The acid value of the solid polyurethane is from 8 to 45 mgKOH/g. An acid value below the lower limit will lead to phase separation of the dispersion, an acid value higher than the upper limit will make the polyurethane water soluble, leading to a dispersion with undesired high viscosity.

After the preparation of the polyurethane, the polyurethane is dispersed into water by adding water to the polyurethane under stirring. The addition of water to the polyurethane and preparation of the dispersion is preferably performed when the polyurethane is still warm. The (warm) polyurethane can also be added to water under vigorous stirring. The obtained polyurethane dispersion has dispersed particles with a size in the range of 60 to 200 nm.

The amount of water used is 20 to 80 wt. %, based on the weight of the total polyurethane dispersion. The amount of water used is preferably sufficient to obtain a dispersion with a solids content of 20 to 80 wt. %, more preferably 30 to 70 wt. %, and even more preferably 35 to 60 wt. %. It is preferred that 75 wt. % or more, preferably 80 wt. % or more, even more preferably 90 wt. % or more, of the solids content of the aqueous dispersion of the auto-oxidatively drying polyurethane according to the invention is comprised of components (i) to (v).

As described above, the polyurethane is preferably neutralized before or during the dispersing step, by adding 0.5 to 2.5 wt. % of a neutralizing agent (relative to the total weight of the polyurethane dispersion).

In case a low boiling solvent was used in the preparation of the polyurethane, the process according to the invention further comprises a distillation step before, during or after the dispersion step. Preferably the solvent is removed by distillation immediately after the dispersion step. The resulting dispersion has substantially no residual solvent and by consequence a low volatile organic content (VOC).

Optionally auxiliary components can be added to the polyurethane prior, during or after the dispersion in water. Auxiliary components that are advantageous for improving the dispersion properties for the present invention are anti-foaming agents, drying agents and anti-skinning agents.

Drying agents are added to accelerate the formation and decomposition of peroxides on the polyunsaturation in the polyurethane, resulting in faster curing of the coating. Drying agents that may be used can be in a solid form or in solution, including, for example, organo-metal salts, such as cobalt, manganese, vanadium, zirconium, zinc, barium, calcium, cerium and the like. When employed, preferably salts of cobalt, calcium, manganese and zirconium or mixtures thereof (more preferably cobalt, calcium, zirconium and mixtures thereof) are used as drying agents. The amount of drying agent used is generally based on the drying oil component in the formulation as within the knowledge of the person skilled in the art.

Anti-skinning agents can be added to air-drying coatings to prevent in-can skinning during storage. Anti-skinning agents react with the free radicals formed during the oxidative polymerization processes, as they are more readily oxidized than the drying oils or drying oil derivatives present in the coating. A commonly used anti-skinning agent is methyl ethyl ketoxime.

Other additives which may be included in the dispersion include those commonly used in aqueous compositions, such as, for example, one or more of the following: plasticizers, pigments, colorants, surfactants, thickeners, heat stabilizers, levelling agents, etc.

The invention also relates to the aqueous dispersions of an auto-oxidatively drying polyurethane obtainable by the process of the invention, more in particular to an aqueous dispersion of an auto-oxidatively drying polyurethane comprising:
(a) 20 to 80 wt. % of an auto-oxidatively drying polyurethane obtainable by reacting:
   (i) 1 to 90 wt. % of an unsaturated fatty acid esterified polyol,
   (ii) 1 to 90 wt. % of a hydroxyl functional polyalkene having one or more unsaturated bonds in the backbone chain between 2 hydroxyl groups,
   (iii) 1 to 10 wt. % of a polyhydroxy carboxylic acid,
   (iv) 1 to 40 wt. % of a polyisocyanate, and
   (v) 0 to 30 wt. % of a diol having no polyunsaturation; wherein the amounts of components (i) to (v) add up to 100 wt. %;
(b) optionally 0.5 to 2.5 wt. % of a neutralizing agent; and
(c) 20 to 80 wt. % of water,
wherein the amounts of (a), (b) and (c) add up to 100 wt. %.

These aqueous dispersions of an auto-oxidatively drying polyurethane of the invention have a very good hydrolytic stability and good adhesion, mechanical and optical properties in coating applications, and have further advantageous properties as described above. All preferences for the components described above equally apply to the components in the aqueous dispersions according to the invention.

Furthermore, in a preferred embodiment the dispersions contain less than 5 wt. %, preferably less than 3 wt. % and more preferably less than 2 wt. % of a solvent. Most preferably, the dispersion contains essentially no solvent, so that pollution of the environment with organic solvents is minimized.

The invention therefore also relates to an aqueous dispersion of an auto-oxidatively drying polyurethane that has a volatile organic content (VOC) of less than 50 g/litre, preferably less than 30 g/litre and more preferably less than 20 g/litre, as measured by ISO method 11890-2.

The dispersions can contain auxiliary components for improving dispersion properties as described above. Further, the dispersions may comprise auxiliary components for the envisaged end-use, for example plasticizers, pigments, colorants, surfactants, thickeners, heat stabilizers and levelling agents.

The invention also relates to the use of the aqueous dispersion of an auto-oxidatively drying polyurethane according to the invention for the manufacture of, for example, coating compositions, printing ink compositions and adhesive compositions. The invention further relates to such compositions that comprise the aqueous dispersion of an auto-oxidatively drying polyurethane according to the present invention.

In an alternative embodiment, the aqueous dispersion further comprises a co-binder, preferably an acrylic binder. The co-binder may be combined with the auto-oxidatively drying polyurethane as a co-dispersion, as a molecular hybrid or as a blend. The co-binder preferably has a separate different curing system in that the co-binder comprises reactive groups that crosslink by a reaction other than the auto-oxidatively crosslinking reaction of the main polyurethane binder. Preferably, the co-binder comprises keto and/or hydrazide groups for crosslinking the co-binder, optionally in combination with a separate polyhydrazide crosslinking agent.

In a preferred embodiment, a coating composition comprises as a first binder component the auto-oxidatively drying polyurethane according to the present invention and a second binder component selected from the group of acrylics or urethane-acrylics comprising carbonyl or hydrazine crosslinking groups. Such coating composition is referred to as a hybrid coating composition. The advantage of said hybrid coating composition is that the drying or hardening conditions can be taylored to meet the requirements for the envisaged application. Preferably, the second binder is also in aqueous dispersion as a separately dispersed component or as a co-dispcrsed mixture of the first and second binder components. The acrylic polymer dispersion co-binder preferably containing carbonyl can be prepared as disclosed in EP-927198, or EP-989163. The acrylic-urethane polymer dispersion co-binder containing carbonyl functionality can be prepared as disclosed in EP332326. Further, the present invention provides the use of a coating composition comprising an aqueous dispersion of an auto-oxidatively drying polyurethane according to the invention, as a coating for fabrics, plastics, wood, or metal. The resulting coatings have good mechanical properties, good optical properties like a high gloss, and high durability properties like a high chemical resistance, and high water resistance etc.

The following examples are intended to describe this invention in further detail and should by no means be construed as defining or limiting the scope of the invention. The person skilled in the art will be able to identify and use several modifications and variations of the herein defined processes and compositions that will fall within the scope of protection of the present invention.

### Example 1.

### A. Preparation of the unsaturated fatty acid esterified polyol.

In a polycondensation reactor equipped with an, agitator, 953 parts by weight of soya bean fatty acid (Nouracid SE-30 ex Akzo Nobel), 733.4 parts by weight of conjugated sunflower fatty acid (Prifac 8968™, ex Uniqema Chemie), 346 parts by weight of benzoic acid, 1.5 parts by weight of dibutyl stannous oxide and 733 parts by weight of pentaerythritol were heated to 220°C. The batch was reacted and water was removed until an acid value below 3 mgKOH/g was obtained. The batch was cooled to 150°C and 285 parts by weight of phthalic acid anhydride, 264 parts by weight of isophthalic acid and 183 parts by weight of trimethylol propane were added. The batch was heated to 240°C and reacted until the reaction mixture had an acid value below 3 mgKOH/g. The batch was then cooled and poured out in a storage container.

### B. Preparation of the auto-oxidatively drying polyurethane and dispersion thereof.

In a suitable reactor equipped with a condenser, 1,596 parts by weight of the unsaturated fatty acid esterified polyol obtained in step A are heated to a temperature of 100 °C. Under stirring 120 parts by weight of dimethylol propionic acid and 72 parts by weight of PolyBd R-20LM are mixed in. The batch is then cooled to 90°C and 800 parts by weight of methyl ethyl ketone are added. The batch is brought to reflux temperature and 400 parts by weight of isophorone diisocyanate are added, divided over 5 portions. After each addition there is a waiting time of 15 minutes. The batch is maintained at reflux temperature for 2 hours. At regular intervals the isocyanate concentration is measured. When the isocyanate concentration has dropped below 0.1 wt. %, the batch is cooled to 50 °C and 56.4 parts by weight of triethyl amine are added. Under stirring 2,840 parts by weight of demineralised water are added to the batch over a period of two hours. The batch is kept at 50 °C for an additional hour and the methyl ethyl ketone is stripped from the dispersion under reduced pressure. Distillation is continued until the methyl ethyl ketone concentration is below 0.1 wt. % (determined by gas chromatography). The solids content is determined and is adjusted with water to 45 %. The batch is cooled down and filtered through a 5 µm PEXL^{®} filter bag.

The properties of the polyurethane dispersion thus obtained are:
Solids content 44 %, pH 6.7, viscosity (at 23°C) 0.7 Pa.s, particle size (Z-average mean, Malvern Autosizer) 159 nm, acid value on solids 24.3 mgKOH/g, number average molecular weight Mn: 3,710, weight average molecular weight Mw: 36,700 (GPC, polystyrene standards and THF + acetic acid as eluent).

### Comparative Example 2

An unsaturated fatty acid esterified polyol was synthesized using the same procedure used in Example 1, but with the raw material composition given in table I.

**Table I.**

| **Component** | **Parts by weight** |
|---|---|
| Soya bean fatty acid (Nouracid SE-30 ex Akzo Nobel) | 1,691 |
| Pentaerythritol | 821 |
| Phthalic acid anhydride | 282 |
| Benzoic acid | 350 |
| Isophthalic acid | 264 |
| Cyclohexyl dimethanol | 92 |
| Fascat 4100 catalyst (butyl stannoic acid ex Arkema) | 1.220 |

A polyurethane was prepared by combining 1,000 parts by weight of the unsaturated fatty acid esterified polyol obtained above, with 197 parts by weight of N-methylpyrrolidone and 78 parts by weight of dimethylol propionic acid at a temperature of 80 °C. As soon as the dimethylol propionic acid has dissolved, 35 parts by weight of triethylamine are added. 245 Parts by weight of isophorone diisocyanate are added over a period of 2 hours. After the addition the batch is heated to 100 °C and reacted until the concentration of isocyanate was below 0.1 wt. %.

A polyurethane dispersion was obtained by taking 750 parts by weight of the neutralized polyurethane, heating it to 60 °C and adding 690 parts by weight of demineralised water over a period of 1 hour. The dispersion was kept for one hour at 60 °C under stirring. Then it was cooled and 9.3 parts by weight of Exkin^{™} 2 were added. The dispersion was filtered through a 5 µm PEXL^{®} filter bag.

The resulting polyurethane dispersion had the following properties:
Solids content 44.5 %, pH 7.0, viscosity (at 23°C) 0.43 Pa.s, particle size 90 nm, acid value (on solids) 25.4 mgKOH/g, number average molecular weight Mn: 3,180, weight average molecular weight Mw: 36,900 (GPC, polystyrene standards and THF + acetic acid as eluent).

### Example 3 and Comparative Example 4.

Coating compositions were prepared from the binders prepared in Examples 1 and 2 in the following way. A mill-base was prepared using the ingredients in table 2 by dispersing them using a Coxless® stirrer.

**Table 2. Mill-base**

| Ingredient | Weight (g) | Function | Supplier |
|---|---|---|---|
| BYK 024 | 0.78 | Defoamer | BYK-Chemie |
| Demineralised water | 43.0 | | |
| Disperbyk 190 | 11.3 | Dispersant | BYK-Chemie |
| Surfynol 104E | 5.5 | Wetting aid | Air Products |
| Kronos 2310 | 244 | Pigment | Kronos |
| Rheolate FX1010 mixture* | 2.4 | Thickener solution | |

| | | | |
|---|---|---|---|
| * Rheolate FX1010 mixture consists of 20 parts of Rheolate FX1010 (ex. Elementis), 6 parts of demineralized water and 20 parts of butylglycol. | | | |

Pigmented coatings were prepared by combining the mill-base with the other ingredienst indicated in table 3, using low shear stirring.

**Table 3. Pigmented coating compositions**

| Ingredient | Ex. 3 | C.Ex. 4 | Function | Supplier |
|---|---|---|---|---|
| Binder from Ex 1 | 635.0 | - | Resin | |
| Binder from C.Ex2 | - | 635.0 | | |
| Demi.water | 35.5 | 35.5 | | |
| Proxel XL2 | 1.6 | 1.6 | Biocide | Arch Chemicals |
| BYK 028 | 2.9 | 2.9 | Defoamer | BYK Chemie |
| Tego Glide 410 diluted with butylglyco 1(1:1) | 2.9 | 2.9 | Slip and flow additive | Tego Chemie |
| Mill base from table xx | 307.0 | 307.0 | | |
| Nuodex Combi LS-mixture* | 11.7 | 11.7 | Drier | Elementis |
| Nuodex Ca10 | 1.0 | 1.0 | Drier | Elementis |
| Exkin 2 | 2.4 | 2.4 | Anti-skinning agent | Elementis |

| | | | | |
|---|---|---|---|---|
| Nuodex Combi LS-mixture consists of: 33 parts of Nuodex Combi LS (ex. Elementis), 33 parts of Surfinol CT211 (ex. Air Products), 33 parts of demineralized water. | | | | |

The paints from Example 3 and Comparative Example 4 were applied onto glass at a wet layer thickness of 150 microns using a master blade. The drying properties were determined at a temperature of 23 °C and at a relative humidity of 50 %, using TNM method 87-11. Furthermore the pendulum hardness according to ISO 1522 was determined after one and seven days of drying at ambient temperature (23 °C). The results are shown in Table 4.

**Table 4. Drying times and hardness build-up.**

| | Ex.3 | Ex.4 |
|---|---|---|
| Drying | | |
| Dust dry | 0:40 h | 1:25 h |
| Tack free | 2:30 h | > 3 h |
| Persoz hardness | | |
| After 1 day | 28 s | 17 s |
| After 7 days | 72 s | 56 s |

### Example 5 and Comparative Example 5a. Hybrid varnish composition prepared from binder of Example 1 and a carbonyl-functional acrylic co-binder dispersion.

A clear coating was prepared using the binder from Example 1 and Setaqua ® 6756, a carbonyl functional acrylic dispersion containing a dihydrazide cross-linker commercially available from Nuplex Resins BV by slowly mixing the ingredients indicated in Table 5. The application properties were compared with the same carbonyl functional acrylic varnish not containing the binder from Example 1 (Comparative Example 5a).

**Table 5**

| | Example 5. | Comparative Example 5a | | |
|---|---|---|---|---|
| Setaqua 6756 | 867.7 | 867.7 | Resin | |
| Binder from Example 1 | 87.0 | | | |
| Dowanol DPM | 42.5 | 42.5 | Co-solvent | DOW |
| Demiwater: | 73.4 | 73.4 | | |
| Dehydran 1293 | 3.5 | 3.5 | Defoamer | Cognis |
| Surfynol 104 DPM | 3.5 | 3.5 | Flow agent | Air products |
| Tego visco plus 3060 | 3.5 | 3.5 | Thickener | Degussa Tego |
| Tego glide 482 | 5.9 | 5.9 | Surface additive | Degussa Tego |

The paint from example 5 and 5a was applied with a brush onto beach veneered panels. It was found by visual inspection that the wet-edge and open time of the varnish of Example 5, containing the binder from Example 1, was much better than the varnish of comparative example 5a. Also the aesthetic qualities (often referred to as "anfeuerung") were judged both on beach and oak veneered panels. Again the varnish from Example 5 showed superior properties.

### Example 6. Preparation of carbonyl functional acrylic co-binder dispersion.

In a suitable container a monomer pre-emulsion was prepared by mixing the ingredients given in Table 6.

**Table 6. Monomer pre-emulsion.**

| | |
|---|---|
| demineralized water | 103,67 |
| ammonium persulphate | 1,47 |
| demineralized water | 758,77 |
| sodium lauryl sulphate | 21,98 |
| methyl methacrylate | 632,76 |
| diacetone acrylamide | 140,67 |
| methacrylic acid | 140,67 |
| butyl methacrylate | 843,27 |
| octyl mercaptane | 28,21 |
| Mercapto ethanol | 13,92 |
| demineralized water | 91,58 |

A double jacketed reactor was charged with 3119 grams of demineralized water and 7.33 grams of sodium lauryl sulphate. The contents of the reactor were heated under a nitrogen flow to 70°C. When the temperature reached 70 °C, 5 % of the monomer pre-emulsion was added to the reactor and heating was continued until the contents reached 80 °C. Than a solution of 1.47 grams of ammonium persulphate, dissolved in 104 grams of demineralized water were added. After the exothermal reaction subsided, the contents of the reactor were heated to 85 °C and the remainder of the monomer pre-emulsion was added to the reactor over a period of 60 minutes. Simultaneously a solution of 3.85 grams of ammonium persulphate dissolved in 242 grams of demineralized water was dosed into the reactor over a period of 70 minutes. The addition pumps for the monomer pre-emulsion and the persulphate solution were rinced with 185 and 37 grams of water respectively. The contents of the reactor were held at 85 °C for 30 minutes after wich the reactor was cooled to 65 °C. 4.84 grams of tertiary butyl hydroperoxide in 17 grams of demineralized water was added to the reactor followed by a solution of 2.15 grams of sodium formaldehyde sulphoxylate in 29 grams of water over a period of 15 minutes. The contents of the reactor were kept at 65 °C for an additional hour. 62.5 grams of adipic dihydrazide were added to the reactor under stirring and the temperature was maintained until it was completely dissolved. The reactor was cooled to 30 °C and 16.54 grams of Acticide AS (ex. Thor Chemicals) were added. The resulting acrylic dispersion was filtered through a 5 micron PEEL® filter bag and stored. The resulting product had a solids content of 32 %, pH of 6.4 and a particle size of 147 nm.

### Example 7. Coating formulation based on binder from Example 1 and the co-binder from Example 6.

A pigmented coating composition was made using the ingredients in Table 7 and using the procedure used to prepare Example 3.

**Table 7. Monomer pre-emulsion.**

| | | | |
|---|---|---|---|
| Mill-base | BYK 024 | 0,16 | Byk Chemie |
| | Demineralized water | 8,8 | |
| | Disperbyk 190 | 2,3 | Byk Chemie |
| | Surfynol 104E | 1,08 | |
| | Kronos2310 | 50 | Kronos |
| | Rheolate FX 1010 mixture* | 0,5 | Elementis |
| Let-down | Binder from Example 1 | 56.8 | |
| | Binder from Example 6 | 81.9 | |
| | Nuodex Combi LS mixture** | 1,2 | Elementis |
| | Proxel XL2 | 0,4 | Arch Chemicals |
| | Exkin 2 | 0,64 | Elementis |
| | Byk 028 | 1 | |
| | Tego glide 410 in BG (1:1) | 1 | Tego Chemie |
| | Optiflo L100/demi (1:1) | 5 | Sud Chemie |

| | | | |
|---|---|---|---|
| * Rheolate FX1010 mixture consists of 20 parts of Rheolate FX1010 (ex. Elementis), 6 parts of demineralized water and 20 parts of butylglycol. **Nuodex Combi LS-mixture consists of: 33 parts of Nuodex Combi LS (ex. Elementis), 33 parts of Surfinol CT211 (ex. Air Products), 33 parts of demineralized water. | | | |

The open time of the paint was determined by applying it onto a Leneta plain chart FORM WH with a bar applicator at 125 microns. Using the rubber eraser of a pencil with a width of at least of 2mm, X-shaped crosses are being applied into the paint layer immediately after if has been applied. A brush (Elma acryl 93-14) loaded with fresh paint is moved twice in the direction of the width of the substrate and twice in the direction of the length of the substrate at the location of the X-shaped cross. This movement is repeated until the cross has completely disappeared. This procedure is repeated after a two-minute interval until the crosses stay visible even after five movements (one movement = twice in the direction of the width of the substrate and twice in the direction of the length of the substrate). The open time is reported as the time in which the X-cross shape damage in the fresh applied film can be completely reworked after five movements immediately after brushing.

The paint based on a blend of the binder from example 1 and the binder from example 6, showed an open time of 30 minutes (at 23 °C and a relative humidity of 50 %) as determined by the method described above.

The paint was also applied on a glass substrate (150 micron wet layer thickness) in order to determine the gloss levels according to DIN 67530. The following values were found:
Gloss
   60 ° geometry 88 gloss units
   85 ° geometry 97 gloss units

The results above clearly demonstrate that the aqueous polyurethane according to the invention, in combination with self-crosslinking acrylic dispersions is very much suited for architectural paints, more specifically water-borne trim-enamels.

## Claims

1. A process for the preparation of an aqueous dispersion of an auto-oxidatively drying polyurethane, comprising the steps of:
(a) forming the auto-oxidatively drying polyurethane by reacting:
(i) an unsaturated fatty acid esterified polyol,
(ii) a hydroxyl functional polyalkene having one or more unsaturated bonds in the backbone chain between 2 hydroxyl groups,
(iii) a polyhydroxy carboxylic acid,
(iv) a polyisocyanate, and
(v) optionally a diol having no polyunsaturation;
(b) optionally adding a neutralizing agent; and
(c) dispersing the product of step (a) or (b) in water to form an aqueous dispersion.

2. The process according to claim 1, comprising the steps of
(a) providing 20 to 80 wt. % of an auto-oxidatively drying polyurethane formed by reacting:
(i) 1 to 90 wt. % of an unsaturated fatty acid esterified polyol,
(ii) 1 to 90 wt. % of a hydroxyl functional polyalkene having one or more unsaturated bonds in the backbone chain between 2 hydroxyl groups
(iii) 1 to 10 wt. % of a polyhydroxy carboxylic acid,
(iv) 1 to 40 wt. % of a polyisocyanate, and
(v) 0 to 30 wt. % of a diol having no polyunsaturation; wherein the amounts of components (i) to (v) add up to 100 wt. %;
(b) optionally adding 0.5 to 2.5 wt. % of a neutralizing agent; and
(c) adding 20 to 80 wt. % of water to the product of step (b) to form an aqueous dispersion,
wherein the amounts of (a), (b) and (c) add up to 100 wt. %.

3. The process according to any one of claims 1-2, wherein essentially no solvent is used.

4. The process according to any one of claims 1 - 3, wherein the unsaturated fatty acid esterified polyol (i) is an unsaturated fatty acid esterified polyester polyol said polyester polyol being the polycondensation product of at least one unsaturated polyfunctional alcohol and at least one di-functional acid or anhydride thereof.

5. The process according to any one of claims 1-4, wherein the auto-oxidatively drying polyurethane has a number average molecular weight of 30,000 g/mol or more.

6. The process according to any one of claims 1-5 wherein the hydroxyl functional polyalkene (ii) comprises polyalkadiene diol, preferably polybutadienediol.

7. The process according to claim 6, wherein the hydroxyl functional polyalkene (ii) essentially consists of polybutadienediol.

8. The process according to any one of claims 1-7, wherein the hydroxyl functional polyalkene is present in an amount of 2 to 50 wt. % of the combined weight of the hydroxyl functional polyalkene and the unsaturated fatty acid esterified polyol.

9. The process according to any one of claims 1-8, wherein the polyhydroxy carboxylic acid (iii) is 2,2-dimethylol propionic acid, 2,2-dimethylol butyric acid or 2,2-dimethylol acetic acid.

10. The process according to any one of claims 1-9, wherein the auto-oxidatively drying polyurethane formed in step (a) or (b) has a free NCO group content below 3 wt. %, preferably below 1 wt. % (on a total solids basis).

11. The process according to any one of claims 1-10, wherein the ratio of NCO groups in the polyisocyanate to isocyanate reactive OH groups present in the reaction mixture of step (a) is 1.0 or below.

12. An aqueous dispersion of an auto-oxidatively drying polyurethane obtainable by the process according to any one of claims 1-11.

13. An aqueous dispersion of an auto-oxidatively drying polyurethane comprising:
(a) 20 to 80 wt. % of an auto-oxidatively drying polyurethane obtainable by reacting:
(i) 1 to 90 wt. %, preferably 10 to 70 wt% of an unsaturated fatty acid esterified polyol,
(ii) 1 to 90 wt. % preferably 10 to 50 wt% of a hydroxyl functional polyalkene having one or more unsaturated bonds in the backbone chain between 2 hydroxyl groups,
(iii) 1 to 10 wt. % of a polyhydroxy carboxylic acid,
(iv) 1 to 40 wt. % of a polyisocyanate, and
(v) 0 to 30 wt. % of a diol having no polyunsaturation; wherein the amounts of components (i) to (v) add up to 100 wt. %;
(b) optionally 0.5 to 2.5 wt. % of a neutralizing agent; and
(c) 20 to 80 wt. % of water,
wherein the amounts of (a), (b) and (c) add up to 100 wt. %.

14. The use of the aqueous dispersion according to any one of claims 12 or 13 for the manufacture of a coating composition, printing ink composition or adhesive composition.

15. A coating composition, printing ink composition or adhesive composition, comprising the aqueous dispersion of an auto-oxidatively drying polyurethane according to any one of claims 12 or 13.

## Patentansprüche

1. Verfahren zur Herstellung einer wässrigen Dispersion eines autooxidativ trocknenden Polyurethans, die folgenden Schritte umfassend:
(a) Bilden des autooxidativ trocknenden Polyurethans durch Umsetzen von:
(i) einem ungesättigten fettsäureveresterten Polyol;
(ii) einem hydroxyfunktionellen Polyalken, das eine oder mehrere ungesättigte Bindungen in der Gerüstkette zwischen 2 Hydroxygruppen aufweist;
(iii) einer Polyhydroxycarbonsäure;
(iv) einem Polyisocyanat; und
(v) gegebenenfalls einem Diol, das keine Mehrfachunsättigung aufweist;
(b) gegebenenfalls Hinzufügen eines Neutralisationsmittels; und
(c) Dispergieren des Produkts von Schritt (a) oder (b) in Wasser unter Bildung einer wässrigen Dispersion.

2. Verfahren gemäß Anspruch 1, die folgenden Schritte umfassend:
(a) Bereitstellen von 20 bis 80 Gew.-% eines autooxidativ trocknenden Polyurethans, das gebildet wurde durch Umsetzen von:
(i) 1 bis 90 Gew.-% eines ungesättigten fettsäureveresterten Polyols;
(ii) 1 bis 90 Gew.-% eines hydroxyfunktionellen Polyalkens, das eine oder mehrere ungesättigte Bindungen in der Gerüstkette zwischen 2 Hydroxygruppen aufweist;
(iii) 1 bis 10 Gew.-% einer Polyhydroxycarbonsäure;
(iv) 1 bis 40 Gew.-% eines Polyisocyanats; und
(v) 0 bis 30 Gew.-% eines Diols, das keine Mehrfachunsättigung aufweist;
wobei die Mengen der Komponenten (i) bis (v) insgesamt 100 Gew.-% ausmachen;
(b) gegebenenfalls Hinzufügen von 0,5 bis 2,5 Gew.-% eines Nerutralisationsmittels; und
(c) Hinzufügen von 20 bis 80 Gew.-% Wasser zu dem Produkt von Schritt (b) unter Bildung einer wässrigen Dispersion;
wobei die Mengen von (a), (b) und (c) insgesamt 100 Gew.-% ausmachen.

3. Verfahren gemäß einem der Ansprüche 1 bis 2, wobei im Wesentlichen kein Lösungsmittel verwendet wird.

4. Verfahren gemäß einem der Ansprüche 1 bis 3, wobei das ungesättigte fettsäureveresterte Polyol (i) ein ungesättigtes fettsäureverestertes Polyesterpolyol ist, wobei das Polyesterpolyol das Polykondensationsprodukt wenigstens eines ungesättigten polyfunktionellen Alkohols und wenigstens einer difunktionellen Säure oder eines Anhydrids davon ist.

5. Verfahren gemäß einem der Ansprüche 1 bis 4, wobei das autooxidativ trocknende Polyurethan ein Zahlenmittel des Molekulargewichts von 30 000 g/mol oder mehr hat.

6. Verfahren gemäß einem der Ansprüche 1 bis 5, wobei das hydroxyfunktionelle Polyalken (ii) ein Polyalkadiendiol, vorzugsweise Polybutadiendiol, umfasst.

7. Verfahren gemäß Anspruch 6, wobei das hydroxyfunktionelle Polyalken (ii) im Wesentlichen aus Polybutadiendiol besteht.

8. Verfahren gemäß einem der Ansprüche 1 bis 7, wobei das hydroxyfunktionelle Polyalken in einer Menge von 2 bis 50 Gew.-% des kombinierten Gewichts des hydroxyfunktionellen Polyalkens und des ungesättigten fettsäureveresterten Polyols vorhanden ist.

9. Verfahren gemäß einem der Ansprüche 1 bis 8, wobei es sich bei der Polyhydroxycarbonsäure (iii) um 2,2-Dimethylolpropionsäure, 2,2-Dimethylolbuttersäure oder 2,2-Dimethylolessigsäure handelt.

10. Verfahren gemäß einem der Ansprüche 1 bis 9, wobei das in Schritt (a) oder (b) gebildete autooxidativ trocknende Polyurethan einen Gehalt an freien NCO-Gruppen von unter 3 Gew.-%, vorzugsweise unter 1 Gew.-% (bezogen auf die Gesamtfeststoffe) aufweist.

11. Verfahren gemäß einem der Ansprüche 1 bis 10, wobei das Verhältnis von NCO-Gruppen im Polyisocyanat zu isocyanatreaktiven OH-Gruppen, die im Reaktionsgemisch von Schritt (a) vorhanden sind, 1,0 oder weniger beträgt.

12. Wässrige Dispersion eines autooxidativ trocknenden Polyurethans, das durch das Verfahren gemäß einem der Ansprüche 1 bis 11 erhältlich ist.

13. Wässrige Dispersion eines autooxidativ trocknenden Polyurethans, umfassend:
(a) 20 bis 80 Gew.-% eines autooxidativ trocknenden Polyurethans, das erhältlich ist durch Umsetzen von:
(i) 1 bis 90 Gew.-%, vorzugsweise 10 bis 70 Gew.-%, eines ungesättigten fettsäureveresterten Polyols;
(ii) 1 bis 90 Gew.-%, vorzugsweise 10 bis 50 Gew.-%, eines hydroxyfunktionellen Polyalkens, das eine oder mehrere ungesättigte Bindungen in der Gerüstkette zwischen 2 Hydroxygruppen aufweist;
(iii) 1 bis 10 Gew.-% einer Polyhydroxycarbonsäure;
(iv) 1 bis 40 Gew.-% eines Polyisocyanats; und
(v) 0 bis 30 Gew.-% eines Diols, das keine Mehrfachunsättigung aufweist;
wobei die Mengen der Komponenten (i) bis (v) insgesamt 100 Gew.-% ausmachen;
(b) gegebenenfalls 0,5 bis 2,5 Gew.-% eines Nerutralisationsmittels; und
(c) 20 bis 80 Gew.-% Wasser;
wobei die Mengen von (a), (b) und (c) insgesamt 100 Gew.-% ausmachen.

14. Verwendung der wässrigen Dispersion gemäß einem der Ansprüche 12 oder 13 zur Herstellung einer Beschichtungszusammensetzung, Druckfarbenzusammensetzung oder Kleberzusammensetzung.

15. Beschichtungszusammensetzung, Druckfarbenzusammensetzung oder Kleberzusammensetzung, die die wässrige Dispersion eines autooxidativ trocknenden Polyurethans gemäß einem der Ansprüche 12 oder 13 umfasst.

## Revendications

1. Procédé de préparation d'une dispersion aqueuse de poly(uréthane) séchant par auto-oxydation, comprenant les étapes consistant à :
(a) former le poly(uréthane) séchant par auto-oxydation en faisant réagir :
(i) un polyol estérifié d'acide gras insaturé,
(ii) un poly(alcène) à fonctionnalité hydroxyle ayant une ou plusieurs liaisons insaturées dans la chaîne de squelette entre 2 groupes hydroxyle,
(iii) un acide carboxylique polyhydroxy,
(iv) un poly(isocyanate), et
(v) facultativement un diol sans polyinsaturation ;
(b) ajouter facultativement un agent neutralisant ; et
(c) disperser le produit de l'étape (a) ou (b) dans de l'eau pour former une dispersion aqueuse.

2. Procédé selon la revendication 1, comprenant les étapes consistant à :
(a) fournir 20 à 80 % en poids d'un poly(uréthane) séchant par auto-oxydation formé en faisant réagir :
(i) 1 à 90 % en poids d'un polyol estérifié d'acide gras insaturé,
(ii) 1 à 90 % en poids d'un poly(alcène) à fonctionnalité hydroxyle ayant une ou plusieurs liaisons insaturées dans la chaîne de squelette entre 2 groupes hydroxyle,
(iii) 1 à 10 % en poids d'un acide carboxylique polyhydroxy,
(iv) 1 à 40 % en poids de poly(isocyanate), et
(v) 0 à 30 % en poids d'un diol sans polyinsaturation ;
dans lequel les quantités des composants (i) à (v) cumulées donnent 100 % en poids ;
(b) ajouter facultativement 0,5 à 2,5 % en poids d'un agent neutralisant ; et
(c) ajouter 20 à 80 % en poids d'eau au produit de l'étape (b) pour former une dispersion aqueuse,
dans lequel les quantités de (a), (b) et (c) cumulées donnent 100 % en poids.

3. Procédé selon l'une quelconque des revendications 1 à 2, dans lequel essentiellement aucun solvant n'est utilisé.

4. Procédé selon l'une quelconque des revendications 1 à 3, dans lequel le polyol estérifié d'acide gras insaturé (i) est un polyol de poly(ester) estérifié d'acide gras insaturé, ledit polyol de poly(ester) étant le produit de polycondensation d'au moins un alcool polyfonctionnel insaturé et au moins un acide difonctionnel ou anhydride de celui-ci.

5. Procédé selon l'une quelconque des revendications 1 à 4, dans lequel le poly(uréthane) séchant par auto-oxydation présente une masse moléculaire moyenne en nombre de 30 000 g/mol ou plus.

6. Procédé selon l'une quelconque des revendications 1 à 5, dans lequel le poly(alcène) à fonctionnalité hydroxyle (ii) comprend un poly(alcadiènediol), de préférence le poly(butadiènediol).

7. Procédé selon la revendication 6, dans lequel le poly(alcène) à fonctionnalité hydroxyle (ii) est essentiellement constitué de poly(butadiènediol).

8. Procédé selon l'une quelconque des revendications 1 à 7, dans lequel le poly(alcène) à fonctionnalité hydroxyle est présent dans une quantité de 2 à 50 % en poids du poids combiné du poly(alcène) à fonctionnalité hydroxyle et du polyol estérifié d'acide gras insaturé.

9. Procédé selon l'une quelconque des revendications 1 à 8, dans lequel l'acide carboxylique polyhydroxy (iii) est l'acide 2,2-diméthylol propionique, l'acide 2,2-diméthylol butyrique ou l'acide 2,2-diméthylol acétique.

10. Procédé selon l'une quelconque des revendications 1 à 9, dans lequel le poly(uréthane) séchant par auto-oxydation formé à l'étape (a) ou (b) présente une teneur en groupe NCO libre inférieure à 3 % en poids, de préférence inférieure à 1 % en poids (sur une base de matière sèche).

11. Procédé selon l'une quelconque des revendications 1 à 10, dans lequel le rapport entre les groupes NCO dans le poly(isocyanate) et les groupes OH réactifs vis-à-vis de l'isocyanate présents dans le mélange de réaction de l'étape (a) est de 1,0 ou moins.

12. Dispersion aqueuse d'un poly(uréthane) séchant par auto-oxydation susceptible d'être obtenue par le procédé selon l'une quelconque des revendications 1 à 11.

13. Dispersion aqueuse d'un poly(uréthane) séchant par auto-oxydation, comprenant :
(a) 20 à 80 % en poids d'un poly(uréthane) séchant par auto-oxydation pouvant être obtenu en faisant réagir :
(i) 1 à 90 % en poids, de préférence 10 à 70 % en poids d'un polyol estérifié d'acide gras insaturé,
(ii) 1 à 90 % en poids, de préférence 10 à 50 % en poids d'un poly(alcène) à fonctionnalité hydroxyle ayant une ou plusieurs liaisons insaturées dans la chaîne de squelette entre 2 groupes hydroxyle,
(iii) 1 à 10 % en poids d'un acide carboxylique polyhydroxy,
(iv) 1 à 40 % en poids d'un poly(isocyanate), et
(v) 0 à 30 % en poids d'un diol sans polyinsaturation ;
dans lequel les quantités des composants (i) à (v) cumulées donnent 100 % en poids ;
(b) facultativement 0,5 à 2,5 % en poids d'un agent neutralisant ; et
(c) 20 à 80 % en poids d'eau,
dans laquelle les quantités de (a), (b) et (c) cumulées donnent 100 % en poids.

14. Utilisation de la dispersion aqueuse selon l'une quelconque des revendications 12 ou 13 pour la fabrication d'une composition de revêtement, d'une composition d'encre d'impression ou d'une composition adhésive.

15. Composition de revêtement, composition d'encre d'impression ou composition adhésive, comprenant la dispersion aqueuse d'un poly(uréthane) séchant par auto-oxydation selon l'une quelconque des revendications 12 ou 13.
